# EUROPEAN PATENT APPLICATION

(11) **EP 2 884 330 A1**
(43) Date of publication of application: **17.06.2015**
(21) Application number: 13196565.9
(22) Date of filing: 10.12.2013
(51) Int. Cl.: G02B 27/28, G03C 1/73, G11B 7/245, G11B 7/257, G02B 5/18

(54) **Method and optical system for Surface Structuring of Amorphous Substances via the Polatization Direction Modulated Light Field**

(71) Applicant: Institute of Solid State Physics, University of Latvia, 1063 Riga (LV)
(72) Inventor: Teteris, Janis, LV-2169 Salaspils (LV); Potanina, Elina, LV-3002 Jelgava (LV); Klismeta, Krista, LV-3002 Jelgava (LV)
(74) Representative: Koppel, Mart Enn

(57) **Abstract**

A method for preparing SRG structures on a photoactive film material, comprising amorphous chalcogenide, or azobenzene polymers, the method comprising creating an optical field using single light beam and directing said light beam at said photoactive film material, creating a recording spot at said photoactive film material, wherein said light field is polarized and the polarization direction is laterally modulated over said recording spot. Incoherent lasers operating in ultraviolet and visible spectral region (300 nm - 800 nm) can be used. Also disclosed is an optical system for carrying out such method.

## Description

### Technical Field

The proposed method is applicable in surface structuring of materials in lithography as well as for production of the diffractive optical elements.

### Background Art

In 1976 Chomat et al (J Non-Cryst Sol 1976;20:427-37) showed that a thin film of an amorphous As₂Se₃ subjected to an intensity modulated red light interference pattern was significantly altered: a relief hologram was formed on the surface of the film. Almost twenty years later a similar phenomenon for thin layers of azobenzene containing polymers was observed by Rochon et al (Appl Phys Lett 1995;66:136-8) and Kim et al (Appl Phys Lett 1995;66:1166-8). A flat film can reach a corrugation whose amplitude may be up to fifty per cent of the initial thickness. This suggests that the material moieties are put in light-induced lateral transfer regarding the propagation direction of exciting light. The most commonly used method to induce mass motion is holographic recording with which a sinusoidal modulated intensity pattern can be obtained at the submicron scale. Recently, it has been demonstrated that surface relief structures can be formed also by a focused light spot (Hisakuni H, Tanaka K., Appl Phys Lett 1994;65:2925-7) and illumination performed via a metal microgrid placed on the sample (Kokenyesi S, et al J Non-Cryst Sol 2000;353:1470-3). The surface patterns can be erased by homogeneous illumination or heating above glass transition temperature of recording media. The surface relief grating (SRG) direct formation by two coherent laser beam interference has been observed in different disordered materials: in amorphous inorganic (As-S, As-Se) chalcogenides, Sb-P-O oxide-containing glass and organic (azobenzene-containing organic polymers, acrylamide photopolymers, azocellulose, organic molecular glass compounds (see Teteris J. et al.Physics Procedia 2013, 44; 151-8).

The efficiency of SRG formation on the azobenzene containing polymer and chalcogenide semiconductor films strongly depends on the polarization state of the recording beams (Asatryan KE, Galstian T, Vallee R. Phys Rev Lett 2005;94:087401-(1-4); Kryshenik VM, Trunov ML, Ivanitsky VP. J Optoelectron Adv Mater2007;9:1949-64*;* Jiang XL, Li L, Kumar J, Kim DY, Shivshankar V, Tripathy SK. Appl Phys Lett 1996;68:2618-20; Gertners U, Teteris J. Opt Mat 2010;32:807-10). The two s-polarized recording beams produce the largest light intensity modulation in interference pattern. But this configuration only produces a SRG with very low diffraction efficiency and small surface modulation. Under the s-p polarization recording conditions, the two writing beams possesses orthogonal polarization and the resultant electric vector of light on the film surface has the largest variation but the light intensity is uniform over the entire exposed area. This purely polarization recording condition also produces very small surface modulation. The largest surface relief (SR) modulation was obtained under +45°:-45° (linearly orthogonal polarization with a direction 45° regarding the plane of recording scheme) and RCP:LCP (right and left circular polarization of beams) recording conditions. This indicates that the existence of both light intensity and resultant electric field variations are essential to the formation of SRG on amorphous chalcogenide and azobenzene polymer films.

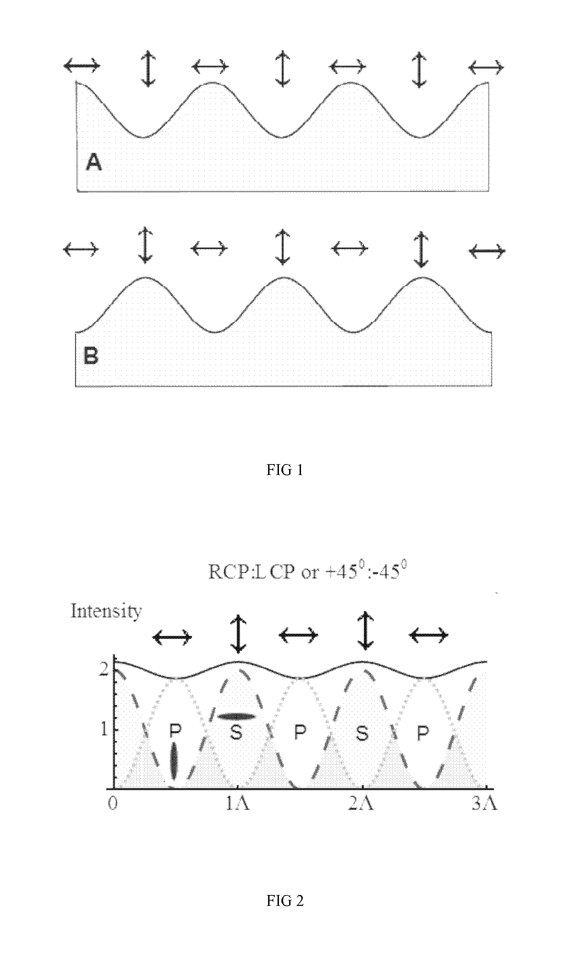

The interference of two orthogonal, circularly (LCP:RCP) or +45° :-45° linearly polarized beams cause a space-varying polarization pattern on sample (Fig. 1 and Fig. 2). That space-varying polarization is linear changing periodically along the x direction. The peak of the SRG is formed at the position of p-polarization state for As₂S₃ films (Fig.1A) and s-polarization state for azobenzene polymer films (Fig.1B) in the polarization modulated pattern. This fact is crucial to evaluate the direction of the driving force for SRG formation. Since the SRG is formed by molecular migration, we can consider that the force drives the migration from s-polarization state toward the position of p-polarization state in case of As₂S₃ films and in the opposite direction for azobenzene polymer films.

A number of models have been proposed to explain the origin of the driving force responsible for SRG formation in the azo-polymers under the light illumination on the molecular level, including mean-field theory (Pederson TG, Johansen PM, Holme NC, Ramanujam PS. Phys Rev Lett 1998;80:89-92), permittivity gradient theory (Yager KG, Barret CJ. Current Opinion Sol St Mat Sc 2001:5:487-94), gradient electric force model (Kumar J, Li L, Jiang X, Kim D, Lee T, Tripathy S. Appl Phys Lett 1998;72:2096-8) and other. There is still not general agreement on the origin of the driving force for this process and no mechanism yet proposed accounts for all experimental observations.

By holographic SRG recording method the largest surface relief can be obtained under +45°:-45° (linearly orthogonal polarization with a direction 45° regarding the plane of recording scheme) and RCP:LCP (right and left circular polarization of beams) recording conditions. In both cases a light polarization direction modulated interference pattern is obtained (see Fig 1. and Fig. 2) and optical field on the sample surface contains two light components with light electric field direction parallel and perpendicular regarding the grating vector.

In summary, a multiplicity of chemical systems making use of photochromic chalcogenide and azobenzene polymers for direct formation of SRG by optical holographic method has been developed during the past 10 years. However, holographic method for formation of polarization direction modulated optical field is connected with certain disadvantages. First, sample illumination has been performed with polarization modulated optical field obtained by interference of two coherent light beams. In this case the lasers with high coherence of light beam must be used. The spectral linewidth must be <100 MHz (<1 pm) and wavelength stability of the laser -2 pm during the recording process. Second, the interference pattern is very sensitive to changes of temperature and mechanical vibrations.

Therefore the holographic recording method is very complicated and expensive. Thus, an alternative, simpler and cheaper methods and systems are needed.

### Summary of invention

One aspect of the invention is a new method for the surface structuring of material via the polarization direction laterally modulated light field. For the purpose of recording, the amorphous chalcogenide (As-S, As-Se) and thin layers of organic azobenzene polymers in which the photoinduced anisotropy and creation of surface relief grating (SRG) by the impact of the light electric field gradient has been observed. Depending on the electric light field gradient and direction a lateral shift of material takes place, resulting in creation of surface structure directly during recording. In the proposed method modulation of the light field polarization direction is carried out perpendicular to a single beam. Unlike the holographic method, where modulation of the light field polarization direction is obtained as a result of interference of two coherent beams, the proposed single beam method has the advantages:
* cheap incoherent beam lasers can be used for optical recording; and
* the optical recording system is highly stable against mechanical vibrations, which noticeably reduces the costs and improves the quality of recording.

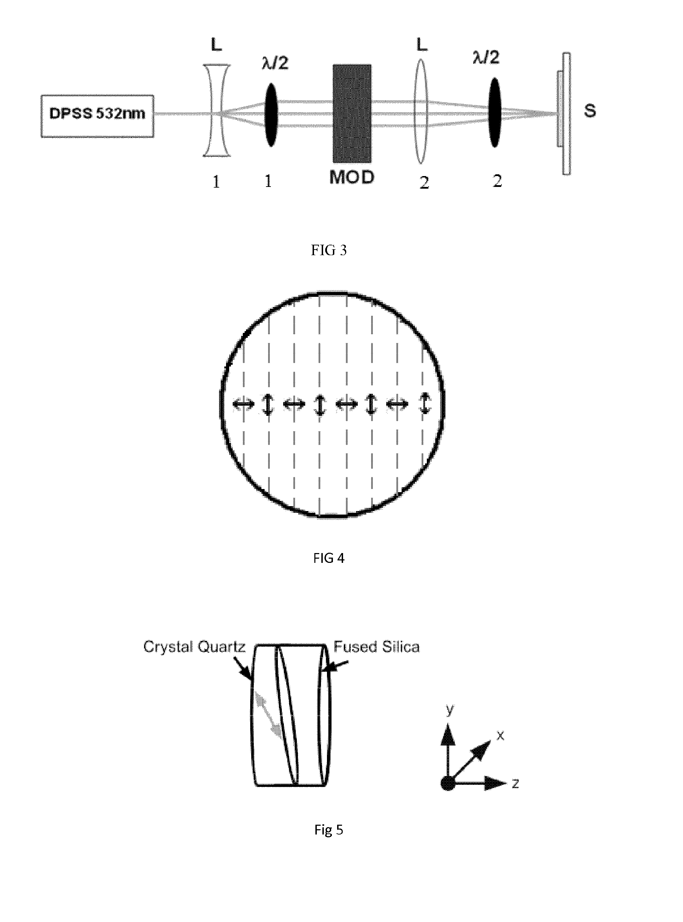

According to the invention, the formation of polarization modulated optical field required for direct SRG recording is realised by a single beam. The optical scheme according to the invention is illustrated in Fig 3. The system comprises a source of single light beam such as diode pumped solid state (DPSS) laser with appropriate wavelength, e.g., 532 nm. Two lenses (L) serve for defocusing and focusing of laser beam on the sample (S). Half wavelength plates (l/2) serve for light polarization direction turning. Polarization modulation element (MOD), such as based on wedge wave plate is used to get light polarization modulation across the laser beam. The final distribution of light polarization direction in the spot on the sample surface is illustrated in Fig 4. The value of SRG period can be changed by the distance between sample and focusing lens.

The scheme is comparatively simple; all optical elements are on one axis. The system is very stable regarding the temperature changes and mechanical vibrations. The lasers with the spectral linewidth and wavelength stability up to several nm can be used.

### Brief description of drawings

Fig 1 illustrates the position of the surface relief grating (SRG) regarding an interference pattern using +45°:-45° or LCP:RCP polarization combinations for recording: A) for As₂S₃ film; B) for DR1 dye grafted polyurethane polymer film.
Fig 2 illustrates the s- and p- polarized light components in space-varying polarization pattern on sample for +45°:-45° or LCP:RCP recording. An orientation of azo-dye molecules due to photoinduced anisotropy is shown for sand *p-* components of light electric field.
Fig 3 illustrates the optical scheme of one beam system for direct recording of SRGs.
Fig 4 illustrates the distribution of light polarization direction in the recording spot.
Fig 5 illustrates the structure of the wedge wave plate (MOD).
Fig 6 illustrates the polarization of laser beam in the recording scheme, wherein Fig 6A shows polarization after the first half-wave plate (i.e., before the MOD element), Fig 6B after the MOD and FIG 6C after the second half-wave plate.
Fig 7 is an optical microscope picture of SRG in amorphous As₂S₃ film recorded by 532 nm laser light.
Fig 8 illustrates the SRG profile obtained by atomic force microscope in amorphous As₂S₃ film recorded by 532 nm laser light.
Fig 9 illustrates the SRG depth dependence on exposure. Δd - SRG depth in micrometers. Samples with thicknesses 3.5 µm, 5.5 µm and 9.5 µm were used. Recording beam intensity was ~ 4 W/cm².

### Description of embodiments

The method for structuring of amorphous substances via the polarization direction modulated light field, the method comprises lateral modulation of polarization direction in one laser beam.

The system according to one embodiment of the invention comprises surface relief patterning by single laser beam with modulated polarization direction across the beam.

The optical scheme according to the invention is illustrated in Fig 3. The system comprises a source of single light beam such as diode pumped solid state (DPSS) laser with appropriate wavelength in spectral region of 300-800 nm. Two lenses (L) serve for defocusing and focusing of laser beam on the sample (S). Half wavelength plates (l/2) serve for light polarization direction turning. Polarization modulation element (MOD), such as based on wedge wave plate is used to get light polarization modulation across the laser beam. The final distribution of light polarization direction in the spot on the sample surface is illustrated in Fig 4. The value of SRG period can be changed by the distance between sample and focusing lens.

Description of one embodiment of the quartz-silica wedge waveplate.

The wedge angle between the two components is of 3°. Only the first component (crystalline quartz) is birefringent. The second component is made of fused silica, which has a very similar refractive index to quartz, but is not birefringent. The fast axis of the quartz element is at 45 degrees to the wedge (see Fig.5).

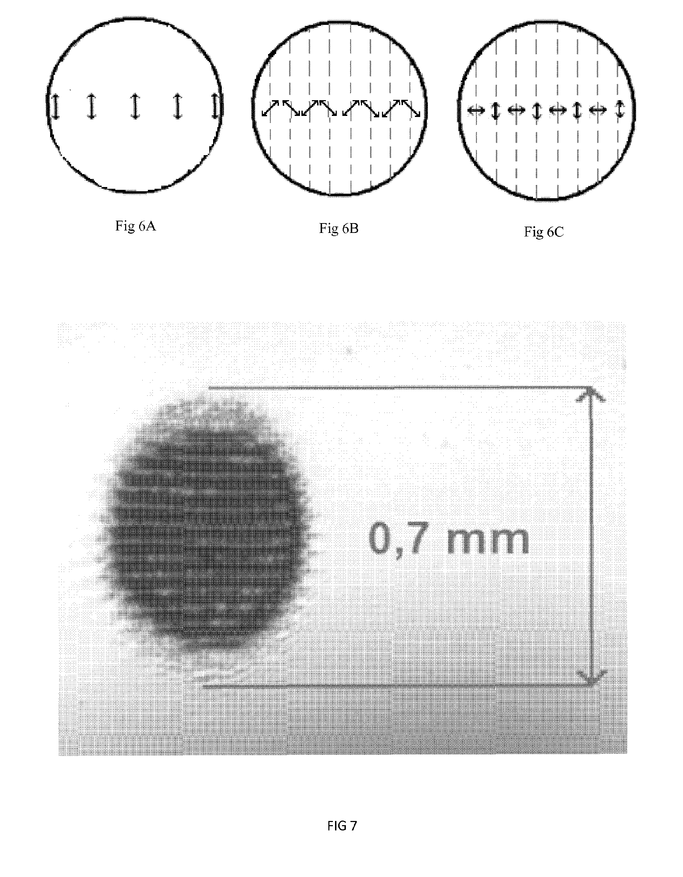

The thickness of this wave plate and therefore his retardance varies across the beam along the Y axis of wedge wave plate. The phase shift depends on the wedge angle and birefringence of crystalline quartz at definite wavelength. For an input beam of uniform linear polarization at 0 degrees to the wedge (see Fig 6A) the output beam will be with periodic changed polarization in direction of Y axis (see Fig 6B). The second half-wave plate serves to obtain the optimal polarization distribution in recording light spot (see Fig 6C). As a result the optical field on the sample surface contains two light components with light electric field direction parallel and perpendicular regarding the grating vector providing the best conditions for SRG formation in amorphous chalcogenide or azobenzene containing organic polymer films.

### Example 1.

### Surface relief grating recording

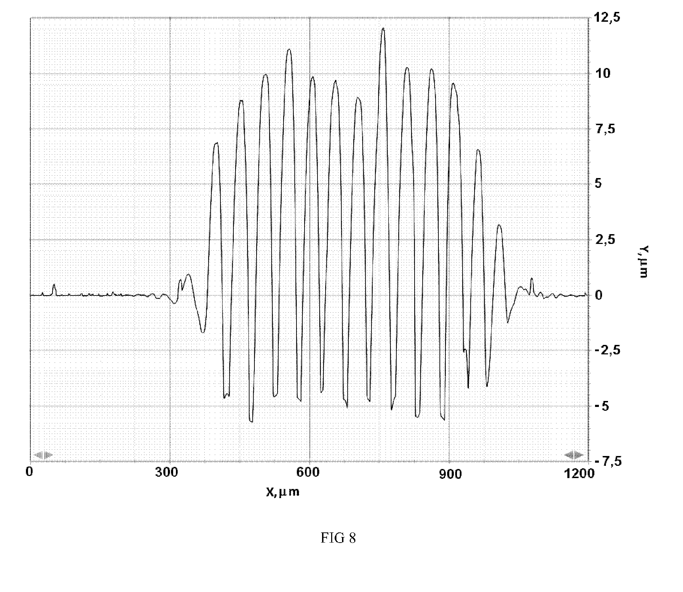

A As₂S₃ film of about 5.5 µm thickness was prepared by vacuum deposition on glass substrate. The irradiation wavelength was 532 nm and laser power ~10 mW. The irradiation time was 5 hours. The optical microscope and atomic force microscope pictures of obtained SRG are shown in the Figure 7 and Figure 8 respectively. It is seen from grating profile picture that the depth of the relief is about 15 µm.

### Example 2.

### Dependence of SRG relief depth on film thickness.

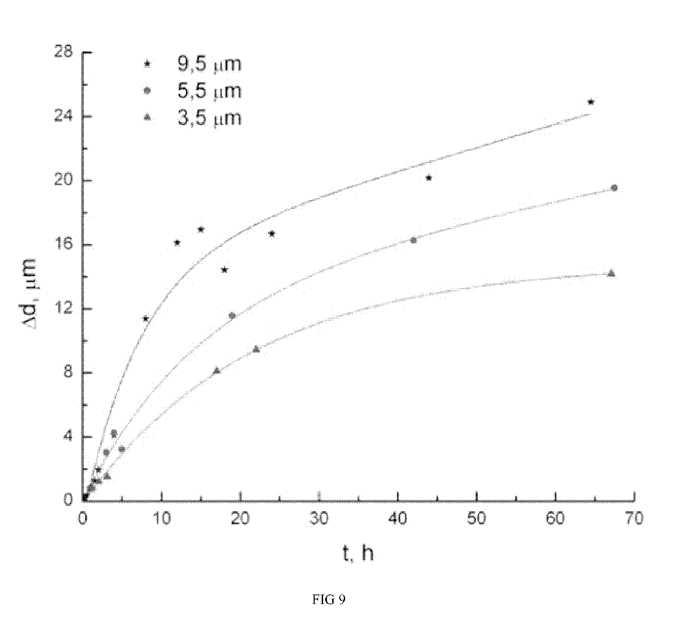

Figure 9 displays the SRG relief depth dependence on exposure time for As₂S₃ films with thicknesses 3.5 µm, 5.5 µm and 9.5 µm. Recording beam intensity on the sample surface ~ 4 W/cm².

### Citation list

[1] Chomat et al, J Non-Cryst Sol 1976;20:427-37
[2] Rochon et al Appl Phys Lett 1995;66:136-8
[3] Kim et al Appl Phys Lett 1995;66:1166-8.
[4] Hisakuni H, Tanaka K., Appl Phys Lett 1994;65:2925-7
[5] Teteris J. et al.Physics Procedia 2013, 44; 151-8

## Claims

1. A method for preparing surface relief grating (SRG) structures on a photoactive film material, comprising amorphous chalcogenide, or azobenzene polymers, the method comprising creating an optical field using single light beam and directing said light beam at said photoactive film material, creating a recording spot at said photoactive film material, wherein said light field is polarized and the polarization direction is laterally modulated over said recording spot.

2. A method as in claim 1, wherein said light beam is generated by a diode pumped solid state laser.

3. A method as in claim 2, wherein the wavelength of said light beam is from 300 to 800nm

4. A method as in claim 3, wherein the wavelength is 532nm.

5. A method as in claims 1 to 4, wherein said single beam is modulated by a wedge wave plate.

6. An optical system for preparing surface relief grating structures on a photoactive film material, the system comprising a source of a laser beam, a defocusing lens, a first half wavelength plate for light polarization direction turning, a polarization direction modulation element for providing light polarization modulation across said laser beam, a second half wavelength plate for light polarization direction turning, and a focusing lens for adjusting value of the grating period.

7. As in claim 5, wherein said source of laser beam is a diode pumped solid state laser.

8. As in claim 6, wherein said laser is operating at wavelength 532nm.

9. As in claims 6 to 8, wherein said polarization modulation element is a wedge wave plate, comprising a birefringent first component and non-birefringent second component, wherein the refractive index of both components is similar, wherein the wedge angle between two components is 3 degrees and the fast axis of the first component is at 45 degrees to the wedge.

10. As in claim 9, wherein said first component is crystalline quartz and the second component is a fused silica.
